# EUROPEAN PATENT APPLICATION

(11) **EP 3 144 357 A1**
(43) Date of publication of application: **22.03.2017**
(21) Application number: 15793242.7
(22) Date of filing: 12.05.2015
(51) Int. Cl.: C09D 11/30, C04B 41/82, C03C 8/18

(54) **MAGENTA INK COMPOSITION FOR DECORATING NON-POROUS SUBSTRATES**

(30) Priority: 16.05.2014 ES 201430712
(71) Applicant: Torrecid, S.A., 12110 Alcora (Castellón) (ES)
(72) Inventor: FORÉS FERNANDES, Alejandro, 12110 Alcora (Castellón) (ES); SANZ GARRIDO, Elena, 12100 Alcora (Castellón) (ES); CONCEPCIÓN HEYDORN, Carlos, 12110 Alcora (Castellón) (ES); RUIZ VEGA., Óscar, 12110 Alcora (Castellón) (ES)
(74) Representative: Carlos Hernando, Borja
(86) International application number: PCT/ES2015/070375
(87) International publication number: WO 2015/173453

(57) **Abstract**

MAGENTA INK COMPOSITION FOR DECORATING NON-POROUS SUBSTRATES, in particular an ink composition containing an organic solvent as a carrier which is liquid at room temperature, a gold compound soluble in the liquid medium of the ink, a binder composition with submicrometric particles of a glass frit, submicrometric particles of oxides or inorganic primary materials and additives. Said ink is intended for printing by means of injection technology on non-porous surfaces in general which are subjected to a heat treatment which allows a magenta coloration to develop which is permanent and resistant to abrasion, cleaning agents and weathering.

## Description

### Object of the invention

The present invention relates to an ink for decorating non-porous substrates by means of injection technology which contains, in its composition, a source of gold such that, after printing, the surfaces of said substrates are subjected to a heat treatment no lower than 500°C, developing magenta colored designs.

The non-porous substrates are characterized by being stable to heat treatment and include, amongst others, materials such as glass, fired ceramic materials (tiles, slabs, etc.), vitro ceramic plates, aluminums, steels and metal sheets in general.

### Description of the state of the art

When decorating products by means of injection technology, the color range may be achieved by means of combining different compositions or inks which contain colorant compounds. In the case of graphic arts, the combination of black, cyan, magenta and yellow inks allows a wide and intense color space to be produced, owing, amongst other aspects, to the fact that said inks are formulated based on organic colorant elements. However, the organic nature of the same limits their application to materials which do not require a subsequent heat treatment, as is the case of cardboard, paper, etc.

If the material to be decorated by means of ink injection requires a subsequent heat treatment in order to fix the decoration, it is necessary to use inks or compositions called inorganic inks or compositions, that is to say, based on inorganic colorant compounds capable of maintaining the coloration after the heat cycle. In this sense, there are inorganic compositions at present which use inorganic pigments (oxides, metallic particles and crystalline structures based on minerals) or organometallic compounds such as colorant elements. It is worth noting that the designation of inks or compositions as inorganic does not exclude that organic compounds are included in their formulation, generally used as solvents or carriers for applying the ink and that in general they are volatilized during the firing of the decorated surface.

Likewise, there are inks for decorating porous surfaces, for example unfired ceramic tiles whose field of application is limited to porous surfaces and any attempt to apply on non-porous surfaces, given its composition and the sedimentation and drying speeds which result from said composition, prevent the minimum definition required in any decorative application being obtained, since the porosity required for these types of inks does not exist, the design to be decorated is not fixed.

Thus the patent WO01/51573A1 discloses a set of inks for decorating by ink injection of unfired enameled or glazed surfaces and therefore porous, including an ink intended for the formulation of the magenta color composed of a soluble gold complex and various organic solvents especially designed to be applied on unfired enameled or glazed ceramic tiles and subjected to firing after applying the glazed or enameled composition and the decoration.

In the case of decorating by means of ink injection of non-porous surfaces subjected to a heat treatment, which is the object of the present invention, the inks require, together with the inorganic colorant compounds, the presence of glass frits in their composition. In this way, once the inks are printed, the corresponding heat treatment produces the fusion of the glass frits, ensuring that the inorganic colorant compounds present in the ink are combined with the non-porous surface to be decorated and thereby provide the print design with the required permanence and inalterability against common agents and attacks.

In the state of the art preceding the present invention, inorganic inks are disclosed for injecting inks typically composed of organic solvents, inorganic pigments and glass frits which allow a magenta coloration to be produced on non-porous substrates. In the state of the art, there are also compositions for decorating non-porous substrates based on soluble gold compounds in the liquid medium of the same.

Thus the patent EP0857707 describes a paste composed of a source of gold and an organic or inorganic binder intended to produce decorations which contain gold on substrates subjected to heat treatment. In this case, the patent EP0857707 takes as a source of gold, either gold aggregates with a particle size between 10 nm - 30 nm or gold colloids soluble in water. In the case of gold aggregates, the patent EP0857707 discloses gold compounds in the form of particles in a greater or lesser degree of aggregation which do not constitute organometallic compounds soluble in the liquid medium of the ink.

However, in the particular case of inks for decorating by means of ink injection, the required viscosity, below 20 cP, prevents the use of gold particles, even submicrometric particles, since they have a high tendency to clump producing golden metallic colorations. In terms of gold colloids, as is described in the patent EP0857707, they are characterized by being soluble in water and intended for formulations with a low content or absence of non-aqueous solvents which rules out their use for ink injection applications on non-porous substrates since the drying speed of the ink is very high which causes the formation of a layer on the surface of the print heads which tends to block the print holes causing defects during printing as well as preventing the print drops maintaining their particularity and/or form during application.

It should also be indicated that the mention of the application by means of serigraphic screen printing of the compositions (see examples 1 and 2) in the patent EP0857707 as well as the fact that the examples described are all in aqueous medium, indicates that said compositions are intended for decorating by means of serigraphy which would explain both the possibility of using gold particles since the high viscosity characteristic of these pastes (2.000cP-10.000cP) maintains said particles in suspension and stabilized, such as gold colloids soluble in water since the use of pastes for serigraphy formulated in completely or partially aqueous mediums is common.

In the case of the patent US2008/0210122, an ink composition is disclosed for ink injection intended for printing on glass which includes a carrier at room temperature based on glycol derivatives, submicrometric particles of fluxed frits and inorganic pigments and/or organometallic compounds such as elements which provide coloration.

In this sense, the organometallic compounds which the mentioned patent US2008/0210122 includes are characterized in that they produce the color when they are converted into metallic oxides by means of an oxidation process once the heat treatment has been carried out. Regarding this, it can be deduced that the cited patent US2008/0210122 does not include in the designation of organometallic compounds, the gold organometallic compounds soluble in the carrier of the ink since it is widely known in the state of the art that the gold organometallic compounds soluble in the carrier of the ink do not undergo oxidation or develop gold oxides as a consequence of a heat treatment.

Also in the patent US2008/0210122, a red ink composed of iron oxide is described as an inorganic pigment responsible for the coloration. However, the use of iron oxide does not allow colorations related to the magenta color to be developed, limiting the color space to be developed.

The objective of the present invention is to provide, with regard to the preceding state of the art, an inorganic ink for decorating non-porous surfaces such that:
- the composition thereof results in viscosities and speeds of sedimentation and drying that allow the printing thereof by means of ink injection on non-porous substrates, preventing the blocking of the injection heads and enabling the print drops to maintain their particularity and/or form during application,
- and that once the non-porous surface has been printed and subjected to a heat treatment greater than 500°C, it develops magenta colored designs.

### Description of the invention

The present invention relates to an inorganic ink composition for decorating non-porous substrates by means of ink injection technology which includes, according to the content of claim 1, at least one organic solvent, at least one organometallic gold compound soluble in the solvent, at least one binder composition of glass frit, at least oxides or inorganic primary materials and at least one additive selected from dispersing agents, foaming agents, humectants or wetting agents, levelling agents and anti-foaming agents. Once the non-porous surface of said substrate has been printed, it is subjected to a heat treatment no lower than 500°C so that the ink is adhered to the substrate and the final magenta color is produced. The adherence which is achieved with the heat treatment is such that the magenta decoration developed is permanent and resistant to abrasion, cleaning agents and weathering. The duration of the heat treatment depends on the nature of the non-porous surface to be treated.

According to the present invention, the organic solvent used as a carrier that is liquid at room temperature is found in the ink in a percentage by weight of between 35% and 55% and may be apolar or a mixture of apolar solvents and solvents with low and/or medium polarity. Apolar solvents include linear and/or branched aliphatic hydrocarbons, aromatic hydrocarbons, naphthenic hydrocarbons and natural oils or mixtures of these. In terms of the solvents with low or medium polarity, they are selected from glycols, glycol ethers, glycol esters, alcohols, ketones, carboxylic acids, organic acids, esters or a mixture of these.

The organometallic gold compound is characterized by being soluble in the liquid medium of the ink and is found in a percentage by weight in the ink of between 0.45% and 15%, preferably between 0.9% and 10%, providing as a source of gold, a percentage by weight of gold in the ink of between 0.3% and 1.5%, preferably between 0.6% and 1%.

An organometallic gold compound is understood as a compound formed by gold bonded to one or various carbon chains termed binders. The binders bonded to the gold may be from the following families: mercaptates, polycyclic mercaptates, mercapto esters, alkoxides, sulfurs, sulfur resonates, natural resonates, synthetic resonates, natural sulfur resonates, synthetic sulfur resonates, terpenes, sulfurized terpenes, terpene thiols, thiolates, linear thiols, cyclic thiols, mercapto pyridines, mercapto pyrimidines, mercapto imidazoles, carboxylates, phosphines and the derivatives thereof soluble in organic mediums, cyanates, mercaptocarboxylic acids, polyalkyl sulfur, amines and/or combinations of binders of said families.

Preferably, they may be from the following families: mercaptates, polycyclic mercaptates, mercapto esters, alkoxides, sulfurs, natural resonates, synthetic resonates, natural sulfur resonates, synthetic sulfur resonates, terpenes, sulfurized terpenes, terpene thiols, thiolates, linear thiols, cyclic thiols, and/or combinations of binders of said families. Depending on the binder or binders, the percentage by weight of gold in the organometallic compound is between 10% and 65%.

The present invention also includes the use of a binder composition of glass frits with a submicrometric particle size required in order for the print design on the non-porous surface to have sufficient shine, adherence and inalterability against common agents and attacks. In this sense, the percentage by weight of the submicrometric frits is between 31% and 50% of the total weight of the ink and are mainly composed of oxides and salts of Si, Bi, Zn, Ti or Sn or combinations of these.

The ink according to the present invention has in its formulation oxides and inorganic primary materials with a submicrometric size required for, combined with the gold compound, producing the correct opacity and magenta coloration. These oxides and inorganic primary materials are found in the ink in a percentage by weight of between 1% and 9% and are selected from zirconium oxide, zinc oxide, silicon oxide, titanium oxide, cerium oxide and tin oxide or a mixture of these. Preferably, they are selected from silicon oxide, titanium oxide and tin oxide.

According to the present invention, the percentage by weight of the submicrometric particles in the ink is up to 50%, preferably between 40% and 50% and the particle size of the same is up to 0.750 micrometers, preferably up to 0.500 micrometers.

Likewise, the liquid part may contain different additives which fulfil different functions. The following may be distinguished among these additives: dispersing or hyperdispersing agents, thickening agents, humectants or wetting agents, levelling agents or anti-foaming agents.

The function of the dispersing or hyperdispersing agents is to prevent clumping in the ink of the submicrometric particles and in the cases in which it is used, it is found in the ink in a percentage of up to 10% by weight. The dispersing agent is selected from carboxylic acid copolymers, acrylic copolymers, polymeric fatty esters, polymeric esters, acidic polyesters, polyamide salts, alkyl ammonium salts, polycarboxylic acids, polycarboxylic acid esters, polyamides, modified polyurethanes, phosphoric esters or a mixture of these.

The function of the thickening agent is to increase the viscosity of the ink at low shear gradients, increasing the definition and improving the sedimentation and may be found in a percentage by weight of up to 3% of the total weight of the ink. The thickening agent is selected from polyamide, polyamide derivatives, acrylic resins, carboxylated acrylic resins, pyrrolidone derivatives, polyvinyl pyrrolidone and the derivatives thereof, polyvinyl butyral, condensates of urea and aldehydes, urea derivatives, polyvinyl resins, cellulose derivatives, cellulose acetate butyrate, polyamide derivatives, acrylic polymer derivatives, phenolic resins, alkyl phenolic resins, alkyd resins, colophony resins, oleoresins, maleates, polyester resins and the derivatives thereof or a mixture of these.

The humectant or wetting agent modifies the surface tension of the liquid medium, thus facilitating the wetting of the surface of the submicrometric solid particles by the solvent. It may be found in the ink in a percentage by weight of up to 2% and is selected from polydimethylsiloxane modified with polyether, fluorinated derivatives, alkoxylated alcohols, ethylene and polyethylene oxide copolymers and polydimethylsiloxane modified with polyester or a mixture of these.

The levelling agent is used to reduce the roughness of the application. According to the present invention, in the cases in which the levelling agent is used, it is found in the ink in a percentage by weight of up to 2% and is selected from acrylic copolymers, acrylic derivatives and modified polysiloxanes or a mixture of these.

The function of the anti-foaming agent is to prevent the formation of foam and in the cases in which it is used, it is found in the ink in a percentage by weight of up to 0.25% and is selected from polysiloxanes and polysiloxanes modified with polyether or a mixture of these.

The ink according to the invention is characterized by developing a magenta coloration on the non-porous, decorated surface and once it has been subjected to heat treatment, the resulting coloration has colorimetric values in terms of CieLa*b* coordinates of between 30 and 50 for the L coordinate, between 8 and 50 for the a* coordinate and -6 and -18 for the b* coordinate. The measurement of the CieLa*b* coordinates is carried out by means of spectrophotometry (Minolta or similar) and the results are expressed in values of L, a* and b*.

According to the present invention, the ink is characterized by a sedimentation speed lower than 0.11%, preferably between 0.09% and 0.06% as well as a drying speed of between 12% and 20% at 10 minutes.

The sedimentation speed is determined with a liquid dispersion stability optical analyzer (Turbiscan or similar) and expresses the results as % by weight of ink sedimented in one hour. The measurement is taken at 3 days and the value is divided by the 72 hours of these three days.

The sedimentation speed results from the ink composition according to the invention and in particular from the thickening agent used as well as from the solvents used, the size of the particles and the remaining additives used.

In terms of determining the drying speed, this is carried out by means of an electronic thermobalance on which a determined quantity of ink placed in a glass of precipitates is weighed and maintained at 100°C. After 10 minutes, it is weighed and the weight of ink, which has evaporate, is determined by the difference, expressed in a percentage.

The drying speed results, fundamentally, from the apolar solvents or a mixture of apolar solvents and solvents with low and/or medium polarity used according to the invention.

Given that the ink according to the present invention is intended for printing by means of injection technology, the viscosity of the same must be less than 20 cP at 22°C. The measurement of the viscosity at a determined temperature is carried out by means of rotational rheometry (Anton Paar MCR101 or similar).

### Preferred embodiments

In order to complement the description being made and with the aim of helping to better understand its characteristics, various exemplary embodiments of inks for providing magenta colored designs according to the invention accompany the present specification. In the examples, the different components, which the ink may include, are indicated as well as the range of the percentage by weight of each one of these in the formulation of the ink. In the case of the organometallic gold components, the percentage by weight of gold in the same is indicated.

All the exemplary embodiments indicated are illustrative and non-limiting. Five solutions of organometallic gold compounds and metal oxide frits with the characteristics indicated in the description of the invention are prepared, dissolving said compounds in apolar solvents and in a mixture of apolar solvents and solvents with low and/or medium polarity in the proportions indicated in the table below:

| **Designation** | **Component** | **1** | **2** | **3** | **4** | **5** | **6** |
|---|---|---|---|---|---|---|---|
| Organometallic gold 1 | Mercapto ester of Au (21%Au) | 1.4% | 2.9% | | | 2.9% | |
| Organometallic gold 2 | Mercaptate of Au (50%Au) | | | 2% | 3% | | 2% |
| Solvent 1 | Linear aliphatic hydrocarbon | 20-40% | 20-40% | 15-35% | 15-35% | 20-55% | 15-35% |
| Solvent 2 | Ester | 5-15% | 5-15% | 5-15% | 5-15% | | 5-15% |
| Solvent 3 | Terpene solvent | | | 5-10% | 5-10% | | 5-10% |
| Frit 1 | Oxides of Bi and Si | 15-20% | 20-30% | 15-25% | 20-30% | 20-30% | 31-50% |
| Frit 2 | Oxides of Zn and Si | 6-25% | 5-15% | 5-15% | 5-15% | 5-15% | |
| SiO₂ | Oxide of Si | 0-4% | 0-4% | 0-4% | 0-4% | 0-4% | 0-4% |
| TiO₂ | Oxide of Ti | 1-6% | 1-6% | 1-6% | 1-6% | 1-6% | 1-6% |
| SnO₂ | Oxide of Sn | 0-3% | 0-3% | 0-3% | 0-3% | 0-3% | 0-3% |
| Bi₂O₃ | Oxide of Bi | 5-10% | | | | | |
| Dispersing agent | Acrylic copolymer | <10% | <10% | <10% | <10% | <10% | <10% |
| Thickening agent | Acrylic derivative | <3% | <3% | <3% | <3% | <3% | <3% |
| Humectant | Ethylene and polyethylene oxide copolymers | <2% | <2% | <2% | <2% | <2% | <2% |
| Levelling agent | Modified polysiloxane | <2% | <2% | <2% | <2% | <2% | <2% |
| Anti-foaming agent | Polysiloxane | <0.25% | <0.25% | <0.25% | <0.25% | <0.25% | <0.25% |

Using said compositions, the inks according to the invention present the following physical properties:

| **Property** | **1** | **2** | **3** | **4** | **5** | **6** |
|---|---|---|---|---|---|---|
| %by weight of Au in the ink | 0.3% | 0.6% | 1% | 1.5% | 0.6% | 1% |
| Viscosity at 22°C (cP) | 12 | 13 | 14 | 14 | 14 | 14 |
| Sedimentation speed (%/h) | 0.060% | 0.075% | 0.065% | 0.075% | 0.070% | 0.0650% |
| Drying speed (% at 10 minutes) | 14% | 16% | 12% | 13% | 17% | 12% |
| L | 38.1 | 41.3 | 42.5 | 42.7 | 41.2 | 41 |
| a* | 8.4 | 11.8 | 14.2 | 50.1 | 11.8 | 12.5 |
| b* | -9.1 | -10.5 | -8.5 | -23.0 | -10.5 | -7.75 |

The characteristics disclosed in the description and the claims may be important both separately and in any combination for implementing the invention in the different embodiments thereof.

The preparation of the magenta inks with the components indicated is carried out by means of the conventional methods generally used in the industry.

## Claims

1. An ink composition intended for printing by means of injection technology on non-porous surfaces subjected to a heat treatment after the printing thereof to develop a magenta coloration, **characterized in that** it comprises:
a. at least one organic solvent as a carrier which is a liquid medium at room temperature,
b. at least one gold compound soluble in the at least said one organic solvent,
c. at least one binder composition with submicrometric particles of a glass frit,
d. at least submicrometric particles of oxides or inorganic primary materials and
e. at least one additive selected from dispersing agents, thickening agents, humectants or wetting agents, levelling agents and anti-foaming agents or a mixture of these.

2. The ink composition according to claim 1, **characterized in that** the percentage by weight of the solvent is between 35% and 55%.

3. The ink composition according to claim 2, **characterized in that** the solvent is an apolar organic solvent or a mixture of apolar organic solvents and solvents with low and/or medium polarity.

4. The ink composition according to claim 1, **characterized in that** the percentage by weight of the gold compound soluble in the liquid medium of the composition is between 0.45% and 15%, preferably between 0.9% and 10% and the percentage by weight of gold in the composition is between 0.3% and 1.5%, preferably 0.6% and 1 %.

5. The ink composition according to claim 1, **characterized in that** the gold compound soluble in the liquid medium of the composition is an organometallic gold compound.

6. The ink composition according to claim 5, **characterized in that** the percentage by weight of gold in the organometallic compound is between 10% and 65%.

7. The ink composition according to claim 1, **characterized in that** the percentage by weight of the submicrometric glass frit particles is between 31% and 50%.

8. The ink composition according to claim 1, **characterized in that** the percentage by weight of the submicrometric oxides and inorganic primary materials is between 1% and 9%.

9. The ink composition according to claim 1, **characterized in that** the percentage by weight of the submicrometric particles is up to 50%, preferably between 40% and 50%.

10. The ink composition according to claim 1, **characterized in that** the particle size of the submicrometric particles is up to 0.750 micrometers, preferably up to 0.500 micrometers.

11. The ink composition according to claim 1, **characterized in that** the dispersing or hyperdispersing agent is found in the composition in a percentage of up to 10% by weight.

12. The ink composition according to claim 1, **characterized in that** the thickening agent is found in the composition in a percentage of up to 3% by weight.

13. The ink composition according to claim 1, **characterized in that** the humectant or wetting agent is found in the composition in a percentage of up to 2% by weight.

14. The ink composition according to claim 1, **characterized in that** the leveling agent is found in the composition in a percentage of up to 2% by weight.

15. The ink composition according to claim 1, **characterized in that** the anti-foaming agent is found in the composition in a percentage of up to 0.25% by weight.

16. The ink composition according to claim 1, **characterized in that** the magenta colorations which are obtained once the heat treatment has been carried out have colorimetric values in terms of La*b* coordinates of between 30 and 50 for the L coordinate, between 8 and 50 for the a* coordinate and between -6 and -18 for the b* coordinate.

17. The ink composition according to claim 1, **characterized in that** it has a sedimentation speed of up to 0.11% and preferably between 0.09% and 0.06%.

18. The ink composition according to claim 1, **characterized in that** it has a drying speed of between 12% and 20% at 10 minutes.

19. The ink composition according to claim 1, **characterized in that** the viscosity is up to 20 cP at 22°C.
